# EUROPÄISCHE PATENTANMELDUNG

(11) **EP 3 572 778 A1**
(43) Veröffentlichungstag der Anmeldung: **27.11.2019**
(21) Anmeldenummer: 19175445.6
(22) Anmeldetag: 20.05.2019
(51) Int. Cl.: G01K 1/02, A23C 3/00, G01K 1/14, G01K 3/14, G01K 13/02, A01J 9/04, B01F 7/00, B01F 15/00

(54) **FLÜSSIGKEITSBEHÄLTER, INSBESONDERE MILCHTANK MIT RÜHRWERKSÜBERWACHUNG**

(30) Priorität: 25.05.2018 DE 102018208275
(71) Anmelder: Robert Bosch GmbH, 70442 Stuttgart (DE)
(72) Erfinder: Smarsli, Florian, 70176 Stuttgart (DE); Zahn, Steffen Johannes, 71636 Ludwigsburg (DE); Udelhoven, Thorsten, 71726 Benningen (DE); Verploegen, Martin Jan Joseph, 40625 Duesseldorf (DE)

(57) **Zusammenfassung**

Die Erfindung betrifft einen Flüssigkeitsbehälter (10), insbesondere Milchtank (10), mit einer Mischvorrichtung (16) zum Rühren einer in dem Flüssigkeitsbehälter befindlichen Flüssigkeit (12); einer Temperaturerfassungseinheit (20; 20') mit einem ersten Temperatursensor (26) zum Erfassen zumindest einer ersten Temperatur der Flüssigkeit (12) in einem ersten Bereich (32) und einem zweiten Temperatursensor (28) zum Erfassen zumindest einer zweiten Temperatur der Flüssigkeit (12) in einem zweiten Bereich (34); und einer Auswerteeinheit (22), welche ausgebildet ist, in Abhängigkeit von einem Vergleich der zumindest einen erfassten ersten Temperatur und/oder eines Verlaufs der erfassten ersten Temperaturen mit der zumindest einen erfassten zweiten Temperatur und/oder einem Verlauf der erfassten zweiten Temperaturen ein Signal (40) auszugeben, um die Mischvorrichtung (16) zu überwachen.

## Beschreibung

### Stand der Technik

Die Erfindung betrifft einen Flüssigkeitsbehälter, insbesondere einen Milchtank, mit einer Mischvorrichtung zum Rühren einer in dem Flüssigkeitsbehälter befindlichen Flüssigkeit sowie ein Verfahren zur Überwachung einer Mischvorrichtung eines Flüssigkeitsbehälters, insbesondere eines Milchtanks. Die Erfindung betrifft ferner eine Auswerteeinheit.

In der Lebensmittelindustrie spielt die Zulieferung und Lagerung flüssiger Lebensmittel eine große Rolle. Oftmals sind verteilte Strukturen anzutreffen, wo viele Produzenten dezentral Rohprodukte herstellen und lagern. Diese Rohprodukte werden dann im Rahmen von Sammelrouten abgeholt. Um Kosten zu sparen werden vermehrt längere Zweiträume zwischen Sammelterminen angestrebt, dies hat zur Folge, dass Rohprodukte länger gelagert und somit auch durchgängig gekühlt werden müssen. Der Nachweis der Kühlung sowie deren Homogenität stellt für viele Produzenten ein Problem dar, vor allem auch, da die eingesetzten Tanks eine hohe Lebenserwartung und damit oft ein höheres Alter aufweisen. Um diese Nachzuweisen ist eine Temperaturüberwachung sowie eine Überwachung des Rührwerkes, welches für die gleichbleibende Temperatur der Milch im gesamten Tank sorgt notwendig.

Im Stand der Technik wird insbesondere die Funktion des Rührwerks durch direkte Messung der jeweiligen Rührwerksdrehzahl durchgeführt, wobei der hierfür erforderliche Drehzahlsensor teurer und aufwändig zu montieren bzw. gar nicht montierbar ist, da an den drehenden Teilen kein Platz vorhanden ist.

### Offenbarung der Erfindung

Gegenstand der vorliegenden Erfindung ist ein Flüssigkeitsbehälter, insbesondere ein Milchtank, mit
- einer Mischvorrichtung zum Rühren einer in dem Flüssigkeitsbehälter befindlichen Flüssigkeit;
- einer Temperaturerfassungseinheit mit einem ersten Temperatursensor zum Erfassen zumindest einer ersten Temperatur der Flüssigkeit in einem ersten Bereich und einem zweiten Temperatursensor zum Erfassen zumindest einer zweiten Temperatur der Flüssigkeit in einem zweiten Bereich; und
- einer Auswerteeinheit, welche ausgebildet bzw. eingerichtet ist, in Abhängigkeit von einem Vergleich der zumindest einen erfassten ersten Temperatur und/oder eines Verlaufs der erfassten ersten Temperaturen mit der zumindest einen erfassten zweiten Temperatur und/oder einem Verlauf der erfassten zweiten Temperaturen ein Signal auszugeben, um die Mischvorrichtung bzw. die Funktionalität der Mischvorrichtung zu überwachen.

Gegenstand der vorliegenden Erfindung ist ferner ein Verfahren zur Überwachung einer Mischvorrichtung eines Flüssigkeitsbehälters, insbesondere Milchtanks, mit den Schritten:
- Erfassen zumindest einer ersten Temperatur einer in dem Flüssigkeitsbehälter befindlichen Flüssigkeit in einem ersten Bereich mittels eines ersten Temperatursensors einer Temperaturerfassungseinheit und zumindest einer zweiten Temperatur der Flüssigkeit in einem zweiten Bereich mittels eines zweiten Temperatursensors der Temperaturerfassungseinheit; und
- Ausgeben eines Signals in Abhängigkeit von einem Vergleich der zumindest einen erfassten ersten Temperatur und/oder eines Verlaufs der erfassten ersten Temperaturen mit der zumindest einen erfassten zweiten Temperatur und/oder einem Verlauf der erfassten zweiten Temperaturen mittels einer Auswerteeinheit, um die Mischvorrichtung bzw. die Funktionalität der Mischvorrichtung zu überwachen.

Der Flüssigkeitsbehälter ist bevorzugt ein Milchtank, bspw. eines landwirtschaftlichen Betriebes bzw. eines Milchviehbetriebes. Der Flüssigkeitsbehälter bzw. der Milchtank kann eine Größe von größer oder gleich 1000 l bis kleiner oder gleich 25000 l aufweisen. Der Flüssigkeitsbehälter bzw. der Milchtank kann jedoch auch als eine Art Hofbehälter ausgebildet sein und eine Größe von größer oder gleich 50 l bis kleiner oder gleich 800 l aufweisen.

An dem Flüssigkeitsbehälter ist bevorzugt eine Kühleinrichtung zum Kühlen der Flüssigkeit bzw. der Milch angeordnet.

Eine Überwachung der Mischvorrichtung kann die Überwachung von zumindest einem der nachfolgenden Fälle umfassen: Defekt, sich anbahnender Defekt, Verschleiß, Reparaturnotwendigkeit, Wartungsnotwendigkeit.

Unter einer Mischvorrichtung kann eine Vorrichtung verstanden werden, welche ausgebildet ist, die Flüssigkeit bzw. Milch in dem Flüssigkeitsbehälter bzw. Milchtank zu mischen, um insbesondere eine Homogenisierung zu erzielen. Die Mischvorrichtung ist bevorzugt eine Rührvorrichtung bzw. ein Rührwerk. Die Rührvorrichtung kann ein motorisch antreibbares Misch- und/oder Rührelement aufweisen, um eine in dem Flüssigkeitsbehälter befindliche Flüssigkeit bzw. die Milch in dem Milchtank zu rühren bzw. zu vermischen. Das Rührelement kann als Rührflügel oder Propeller ausgebildet sein. Die Mischvorrichtung kann jedoch auch eine Pumpe zu Durchmischen Flüssigkeit bzw. Milch aufweisen. Die Mischvorrichtung ist bevorzugt an dem Flüssigkeitsbehälter, insbesondere an einer Wand des Flüssigkeitsbehälters angeordnet.

Die Temperaturerfassungseinheit weist einen ersten Temperatursensor und einen von dem ersten verschiedenen zweiten Temperatursensor auf. D.h., mit anderen Worten, dass Temperaturerfassungseinheit zumindest zwei Temperatursensoren aufweist. Die Temperatursensoren sind bevorzugt ausgebildet, die Temperaturen der Flüssigkeit über thermischen Kontakt zu erfassen. Hierbei sind die Temperaturen bevorzugt in der Flüssigkeit angeordnet. Es ist jedoch auch denkbar, dass zumindest einer der Temperatursensoren oder auch beide Temperatursensoren ausgebildet ist/sind, eine Temperatur der Flüssigkeit berührungslos zu erfassen.

Bei dem ersten Bereich und dem zweiten Bereich handelt es sich um zwei unterschiedliche Bereiche. Der erste Bereich und der zweite Bereich sind bevorzugt in verschiedenen Höhen relativ zu einem Bodenbereich bzw. Boden des Flüssigkeitsbehälters bzw. der Oberfläche der Flüssigkeit angeordnet. D.h., mit anderen Worten, dass sich der erste Bereich und der zweite Bereich bevorzugt in verschiedenen Höhen relativ zu einem Bodenbereich bzw. Boden des Flüssigkeitsbehälters bzw. der Oberfläche der Flüssigkeit erstrecken. Der zweite Bereich ist hierbei bevorzugt in der Nähe des Bodenbereiches bzw. am Bodenbereich angeordnet. Der erste Bereich ist dementsprechend oberhalb des zweiten Bereiches angeordnet. Hierbei sind bevorzugt der erste Temperatursensor in dem ersten Bereich und der zweite Temperatursensor in dem zweiten Bereich angeordnet, um die entsprechenden Temperaturen über thermischen Kontakt zu erfassten.

Die erste Temperatur und die zweite Temperatur werden bevorzugt im Wesentlichen gleichzeitig erfasst.

Die Temperaturerfassungseinheit weist bevorzugt eine elektrische Leitung, insbesondere ein elektrisches Kabel aufweist, welche/welches mit dem ersten Temperatursensor und dem zweiten Temperatursensor elektrisch verbunden ist. Die elektrische Leitung dient hierbei zur leitungsgebundenen Übertragung der gemessenen Temperatursignale. Denkbar ist jedoch auch, dass die Temperaturerfassungseinheit zur Übertragung der gemessenen Temperatursignale eine Sendeeinheit aufweist. Die Sendeeinheit kann ausgebildet sein, die Temperatursignale drahtlos zu versenden.

Unter einer Auswerteeinheit kann im Rahmen der Erfindung eine Einheit verstanden werden, welche ausgebildet bzw. eingerichtet ist, Signale und/oder Daten, insbesondere Temperatursignale bzw. Temperaturmesswerte zu verarbeiten. Die Auswerteeinheit kann einen Signalprozessor, einen Mikrocontroller oder dergleichen aufweisen. Die Auswerteeinheit kann ferner zumindest eine Speichereinheit zum Speichern von Signalen und/oder Daten, insbesondere Temperaturmesswerten aufweisen oder zu diesem Zweck mit einer Speichereinheit verbunden sein. Die Speichereinheit kann einen Cloud-Server, einen Flash-Speicher, einen EPROM oder eine magnetische Speichereinheit aufweisen. Die Auswerteeinheit kann eine Empfangseinheit aufweisen. Die Empfangseinheit kann ausgebildet sein, die Temperaturmesswerte von der Temperaturmesseinheit leitungsgebunden und/oder drahtlos, bspw. über Funk, WLAN, Bluetooth etc. zu empfangen. Die Auswerteeinheit kann ferner zumindest eine Schnittstelle zu der Sendeeinheit der Temperaturerfassungseinheit zum Einlesen von Sensorsignalen bzw. Temperaturmesswerten aufweisen. Die Auswerteeinheit kann ferner eine Schnittstelle zum Ausgeben von Daten oder Messwerten an eine Anzeigeeinheit aufweisen.

Die Auswerteeinheit ist ausgebildet bzw. eingerichtet, in Abhängigkeit von einem Vergleich der zumindest einen erfassten ersten Temperatur und/oder eines Verlaufs der erfassten ersten Temperaturen mit der zumindest einen erfassten zweiten Temperatur und/oder einem Verlauf der erfassten zweiten Temperaturen ein Signal auszugeben, um die Mischvorrichtung zu überwachen. Hierbei kann die Auswerteeinheit ausgebildet bzw. eingerichtet sein, das Signal in Abhängigkeit von einer Temperaturdifferenz und/oder einem Temperaturdifferenzverlauf zwischen der erfassten ersten Temperatur und der erfassten zweiten Temperatur auszugeben. Die Auswerteeinheit kann hierbei ausgebildet bzw. eingerichtet sein, bei Erreichung, Unterschreitung oder Überschreitung definierter Differenzwerte bzw. Schwellenwerte zwischen den erfassten Temperaturen und/oder den Temperaturverläufen ein Signal auszugeben. D.h., mit anderen Worten, dass die Auswerteeinheit ausgebildet ist, eine Temperaturdifferenz und/oder einen Temperaturdifferenzverlauf zu ermitteln und diesen mit einem definierten/vorgegebenen Temperaturdifferenzwerte und/oder definierten/vorgegebenen Temperaturdifferenzverlauf zu vergleichen, um bei Erreichung, Unterschreitung oder Überschreitung ein Signal auszugeben. Die Auswerteeinheit kann insbesondere ausgebildet ist, das Signal erst bzw. nur bei Erreichung, Unterschreitung oder Überschreitung des Temperaturdifferenzwertes und/oder des Temperaturdifferenzverlaufs auszugeben. Die Differenzwerte bzw. Schwellenwerte können insbesondere manuell eingebbar und/oder berechenbar und/oder aus einer Tabelle auslesbar sein. Das Signal kann insbesondere ein Alarmsignal sein. Das Signal kann ein optisches und/oder ein akustisches und/oder ein kinästhetisches Signal sein. Das Signal kann einen Defekt und/oder einen Verschleiß und/oder eine Reparaturnotwendigkeit und/oder eine Wartungsnotwendigkeit der Mischvorrichtung signalisieren. D.h., mit anderen Worten, dass je nach Temperaturdifferenz bzw. Temperaturdifferenzverlauf ermittelbar ist, ob ein Defekt und/oder ein Verschleiß und/oder eine Reparaturnotwendigkeit und/oder eine Wartungsnotwendigkeit der Mischvorrichtung vorliegt. Das Signal kann eine Information, bspw. eine oder mehrere erfasste Temperatur(en) bzw. Temperaturmesswerte oder einen oder mehrere Differenzwert(e) umfassen. Das Signal kann ausgebildet sein, um an einer Anzeigeeinheit, insbesondere auf einem Display anzeigbar zu sein. Die Anzeigeeinheit kann ein Smartphone oder ein beliebiges anderes Endgerät, wie bspw. ein Tablet oder ein PC sein.

Vorteilhaft ist es auch, wenn die Auswerteeinheit ausgebildet ist, die jeweilige Temperatur in definierten Zeitabständen, insbesondere in Zeitabständen von größer oder gleich 5 s bis kleiner oder gleich 10 min, insbesondere in Zeitabständen von ca. 5 min, und/oder für definierte Zeiträume, insbesondere für Zeiträume von größer oder gleich 0,1 s bis kleiner oder gleich 2 min, insbesondere punktuell zu empfangen. Diese Maßnahme trägt weiter zur Einfachheit der Überwachungsvorrichtung bei, da mit einem sehr geringen Ressourcenaufwand, da trotz der ressourcensparenden punktuellen und diskontinuierlichen Temperaturmessung diese dennoch eine ausreichende Genauigkeit bzw. zeitliche Auflösung für die Überwachung bzw. "Diagnose" bietet.

Durch die Ausstattung eines Flüssigkeitsbehälters, insbesondere Milchtanks mit der vorgeschlagenen Temperaturerfassungseinheit und Auswerteeinheit kann sehr einfach, kostengünstig und robust eine Mischvorrichtung auf Fehler überwacht werden kann, so dass eine entsprechende Person rechtzeitig alarmiert werden kann, bspw. über einen Defekt oder einen sich anbahnenden Defekt, so dass ein mögliches Verderben einer Flüssigkeit, insbesondere Milch, verhindert werden kann. Diese Art der Überwachung ist insbesondere deshalb möglich, da aufgrund der natürlich eintretenden Bildung von Temperaturschichten in einem Medium durch die Temperaturbestimmung in verschiedenen Bereichen, insbesondere Höhen Rückschlüsse auf die Temperaturhomogenität im Medium gezogen werden können. Von dieser wiederum können direkte Rückschlüsse auf die Funktionalität der Mischvorrichtung bzw. des Rührwerkes abgeleitet werden. Bildet sich eine Temperaturdifferenz zwischen den Bereichen heraus, kann davon ausgegangen werden, dass in einem definierten Zeitintervall keine Aktivität der Mischvorrichtung stattgefunden hat, was wiederum Aufschluss über einen Defekt und/oder einen Verschleiß und/oder eine Reparaturnotwendigkeit und/oder eine Wartungsnotwendigkeit der Mischvorrichtung gibt. Hierbei ist die Genauigkeit der Absoluttemperatur eher zweitrangig, weshalb die Temperaturmessung kostengünstig, auch über eine einfach nachgerüstete Temperaturmesseinheit, durchgeführt werden kann.

Je größer der - relativ zu einem Bodenbereich des Flüssigkeitsbehälters bzw. der Oberfläche der Flüssigkeit - vertikale Abstand des ersten Bereiches und des zweiten Bereiches bzw. des ersten Temperatursensors und des zweiten Temperatursensors ist, desto schneller kann sich eine Temperaturdifferenz herausbilden, bzw. desto größer wird diese Temperaturdifferenz. Somit kann durch den vertikalen Abstand der Bereiche bzw. der Temperatursensoren die Sensitivität der Überwachung beeinflusst werden.

Vorteilhaft ist es, wenn die Temperaturerfassungseinheit ein Gewichtelement aufweist, um eine Position des ersten Temperatursensors und/oder des zweiten Temperatursensors in dem Flüssigkeitsbehälter - aufgrund der Gewichtskraft des Gewichtelements - im Wesentlichen konstant zu halten. Hierbei ist es insbesondere vorteilhaft, wenn der erste Temperatursensor und/oder der zweite Temperatursensor an und/oder in dem Gewichtelement angeordnet ist/sind. Folglich weist das Gewichtselement eine entsprechende Masse auf, um bspw. bei einem Rühren der Flüssigkeit die Position zu halten. Das Gewichtselement besteht hierbei insbesondere aus einem Material oder mehreren Materialen, welches/welche für den Kontakt mit Lebensmitteln geeignet bzw. lebensmittelecht ist, wie bspw. Edelstahl (i.A. Materialien die von der Food and Drug Administration oder dem Bundesinstitut für Risikominderung für Lebensmittelkontakt empfohlen/freigegeben wurden). Durch diese Maßnahme können zum einen die Temperatursensoren sehr einfach und kostengünstig "lösbar" (hin einer hinreichenden Genauigkeit) in der Flüssigkeit in unterschiedlichen Höhen positioniert bzw. platziert werden. Zum anderen kann das Gewichtselement als Gehäuse für die Temperatursensoren genutzt werden.

Es ist außerdem vorteilhaft, wenn die Temperaturerfassungseinheit eine elektrische Leitung, insbesondere ein elektrisches Kabel aufweist, welche/welches mit dem ersten Temperatursensor und dem zweiten Temperatursensor elektrisch verbunden ist, wobei das Gewichtelement mit einem Leitungsendbereich der elektrischen Leitung mechanisch verbunden ist. Hierbei ist es insbesondere Vorteilhaft, wenn der erste Temperatursensor und/oder der zweite Temperatursensor in und/oder an der elektrischen Leitung angeordnet ist/sind. D.h., mit anderen Worten, dass der erste Temperatursensor und/oder der zweite Temperatursensor in und/oder an einem Mittelbereich (in Längsrichtung des Kabels gesehen), angeordnet sind. Vorteilhaft ist es auch, wenn die elektrische Leitung durch einen Deckel des Flüssigkeitsbehälters geführt ist. Diese Maßnahme bietet eine weitere einfache und kostengünstige Möglichkeit, um die Temperatursensoren in der Flüssigkeit in unterschiedlichen Höhen zu positionieren bzw. zu platzieren.

Des Weiteren ist es vorteilhaft, wenn die Auswerteeinheit ausgebildet ist, das Signal unter Berücksichtigung eines ausgeführten Kühlvorgangs, insbesondere eines Endes eines ausgeführten Kühlvorgangs auszugeben. Bei dem Kühlvorgang handelt es sich hierbei um einen Kühlvorgang zur Kühlung der Flüssigkeit bzw. der Milch. Diese Maßnahme bietet eine weitere Möglichkeit zur Identifizierung einer möglichen Störung der Mischvorrichtung, da nach Beendigung eines Kühlvorgangs charakteristische Temperaturverläufe bei ausbleibender Rührung bzw. Durchmischung der Flüssigkeit resultieren.

### Zeichnungen

Die Erfindung wird nachstehend anhand der beigefügten Zeichnungen beispielhaft näher erläutert. Es zeigen:
- Fig. 1: eine schematische Darstellung einer Ausführungsform eines erfindungsgemäßen Flüssigkeitsbehälters mit einer Temperaturerfassungseinheit und einer Auswerteeinheit;
- Fig. 2: eine Detailansicht der Temperaturerfassungseinheit aus Fig. 1;
- Fig. 3: eine schematische Darstellung einer weiteren Ausführungsform eines erfindungsgemäßen Flüssigkeitsbehälters mit einer Temperaturerfassungseinheit und einer Auswerteeinheit;
- Fig. 4: eine Detailansicht der Temperaturerfassungseinheit aus Fig. 3;
- Fig. 5: ein Diagramm mit zwei erfassten Temperaturverläufen über die Zeit bei einer defekten Mischvorrichtung; und
- Fig. 6: ein Ablaufdiagramm eines Verfahrens zur Überwachung einer Mischvorrichtung eines Flüssigkeitsbehälters.

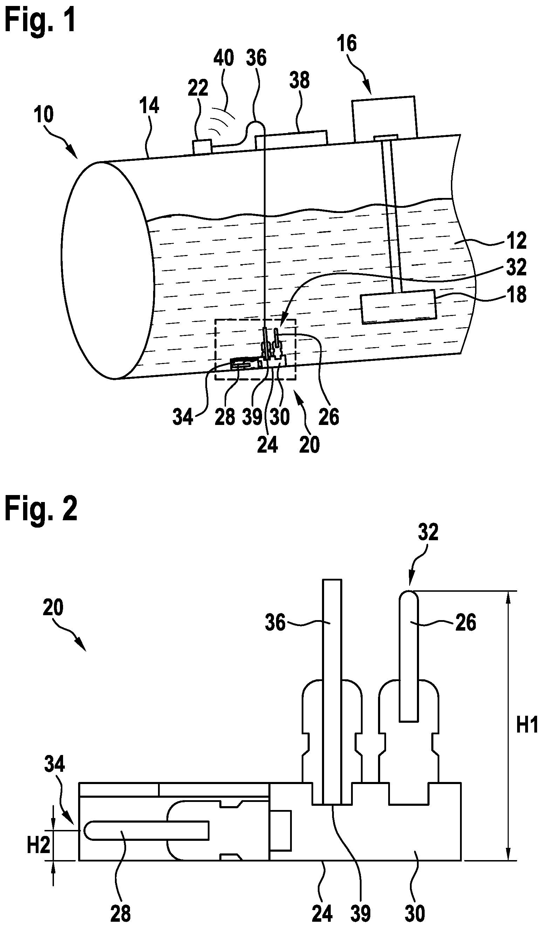

In Fig. 1 ist ein erfindungsgemäßer Flüssigkeitsbehälters 10 dargestellt. Der Flüssigkeitsbehälter 10 ist als Milchtank 10 ausgebildet. In dem Milchtank 10 ist eine Flüssigkeit 12, welche Milch 12 ist, angeordnet bzw. gelagert.

An einer Wand 14 des Milchtanks 10 ist eine motorisierte Mischvorrichtung 16 bzw. eine motorisierte Rührvorrichtung 16 mit einem Rührwerkzeug 18 zum Rühren der Milch 12 angeordnet. Um die Mischvorrichtung 16 bzw. die Funktionalität der Mischvorrichtung 16 zu überwachen, sind eine Temperaturerfassungseinheit 20 und eine Auswerteeinheit 22 vorgesehen.

Die Temperaturerfassungseinheit 20 ist in dem der Milchtank 10 bzw. in einem Bodenbereich 24 des Milchtanks 10 angeordnet. Wie aus der Detailansicht von Fig. 2 ersichtlich ist, weist die Temperaturerfassungseinheit 20 einen ersten Temperatursensor 26 und einen zweiten Temperatursensor 28 auf. Die Temperatursensoren 26, 28 sind an einem Gewichtselement 30 der Temperaturerfassungseinheit 20 angeordnet bzw. werden von diesem getragen. Das Gewichtselement 30 dienst insbesondere dazu, eine Position des ersten Temperatursensors 26 und des zweiten Temperatursensors 28 in dem Milchtank 10 im Wesentlichen konstant zu halten. Der erste Temperatursensor 26 ist in einem ersten Bereich 32 angeordnet und ausgebildet, erste Temperaturen der Milch 12 in dem ersten Bereich 32 zu erfassen. Analog hierzu ist der zweite Temperatursensor 28 in einem zweiten Bereich 34 angeordnet und ausgebildet, zweite Temperaturen der Milch 12 in dem zweiten Bereich 34 zu erfassen. Hierbei sind der erste Bereich 32 in einer ersten Höhe H1 und der zweite Bereich 34 in einer zweiten Höhe H2 relativ zu dem Bodenbereich 24 des Milchtanks 10 angeordnet. Die Höhe H1 und die Höhe H2 sind hierbei unterschiedlich, wobei H1>H2 ist.

Die Temperaturerfassungseinheit 20 weist ferner eine elektrische Leitung 36 zur Übertragung der gemessenen Temperatursignale auf. Die elektrische Leitung ist hierbei als elektrisches Kabel 36 ausgebildet, welche die Temperatursensoren 26, 28 mit der Auswerteeinheit 22 elektrisch verbindet. Die elektrische Leitung 36 bzw. das elektrische Kabel 36 ist hierbei durch einen Deckel 38 des Milchtanks 10 geführt und hängend in dem Milchtank 10 angeordnet. Das Gewichtselement 30 ist mit einem Leitungsendbereich 39 des Kabels 36 mechanisch verbunden. Zur Überwachung der Mischvorrichtung 12 bzw. der Funktionalität der Mischvorrichtung 12 ist die Auswerteeinheit 22 ausgebildet bzw. eingerichtet, die gemessenen Temperatursignale zu empfangen und zu verarbeiten. Hierbei ist die Auswerteeinheit 22 ausgebildet bzw. eingerichtet, ein Signal 40 in Abhängigkeit von einem Vergleich der zumindest einen erfassten ersten Temperatur und/oder eines Verlaufs der erfassten ersten Temperaturen mit der zumindest einen erfassten zweiten Temperatur und/oder einem Verlauf der erfassten zweiten Temperaturen auszugeben. Die Auswerteeinheit 22 ist insbesondere ausgebildet, das Signal 40 in Abhängigkeit von einer Temperaturdifferenz und/oder einem Temperaturdifferenzverlauf zwischen der erfassten ersten Temperatur und der erfassten zweiten Temperatur auszugeben. Ferner ist die Auswerteeinheit 22 ausgebildet, das Signal 40 unter Berücksichtigung eines ausgeführten Kühlvorgangs, insbesondere eines Endes eines ausgeführten Kühlvorgangs auszugeben. D.h., mit anderen Worten, dass mittels der Auswerteeinheit 22 je nach Temperaturdifferenz bzw. Temperaturdifferenzverlauf ermittelbar ist, ob ein Defekt und/oder ein Verschleiß und/oder eine Reparaturnotwendigkeit und/oder eine Wartungsnotwendigkeit der Mischvorrichtung 12 vorliegt, und ein entsprechendes Signal 40 ausgegeben wird. Das Signal 40 ist ausgebildet, um an einer (nicht gezeigten) Anzeigeeinheit, insbesondere auf einem Display einer Anzeigeeinheit angezeigt zu werden.

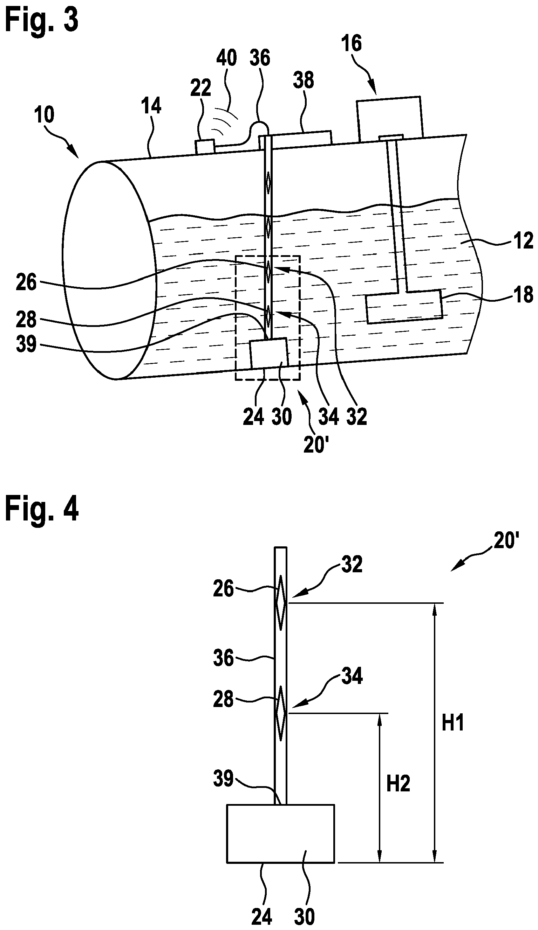

Fig. 3 zeigt den Flüssigkeitsbehälter 10 bzw. Milchtank 10 aus Fig. 1, jedoch mit einer anders ausgestalteten Temperaturerfassungseinheit 20'. Im Unterschied zu der Temperaturerfassungseinheit 20 aus Fig. 1 und 2, sind bei der Temperaturerfassungseinheit 20' der erste Temperatursensor 26 und der zweite Temperatursensor 28 in bzw. an dem hängenden elektrischen Kabel 36 angeordnet. Wie aus der Detailansicht von Fig. 4 ersichtlich ist, sind wiederum der erste Temperatursensor 26 in der Höhe H1 und der zweite Temperatursensor 28 in der Höhe H2 relativ zu dem Bodenbereich 24 des Milchtanks 10 angeordnet. Ferner ist ersichtlich, dass das Gewichtelement 30 mit dem Leitungsendbereich 39 des elektrischen Kabels 36 mechanisch verbunden ist.

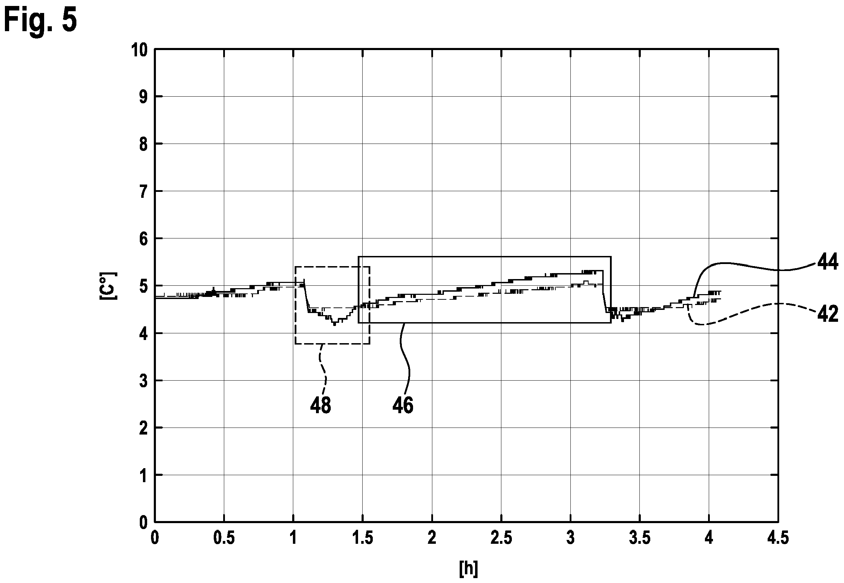

Fig. 5 zeigt beispielhaft zwei Temperaturverläufe 42, 44 bzw. zwei Temperaturkurven 42, 44 von einer Temperaturerfassungseinheit 20, 20' erfassten Temperaturen über die Zeit (Ordinate: Temperatur in °C; Abszisse: Zeit in Stunden) bei ausbleibendem Rührvorgang, d.h. wenn die Mischvorrichtung 16 den Rührvorgang - bspw. aufgrund eines Defekts - nicht durchführt. Hierbei ist der Temperaturverlauf 42 die Verbindungslinie der mittels des ersten Temperatursensors 26 und der Temperaturverlauf 44 die Verbindungslinie der mittels des zweiten Temperatursensors 28 in definierten Zeitabständen erfassten Temperaturen über die Zeit.

Aus einem Vergleich der zwei Temperaturverläufe 42, 44 ist hierbei erkennbar, dass der Rührvorgang ausgeblieben ist. Zum einen ist in einem ersten charakteristischen Bereich 46 eine deutliche sich aufbauende Temperaturdifferenz zwischen den im ersten Bereich 32 erfassten ersten Temperaturen und den in dem zweiten Bereich 34 erfassten zweiten Temperaturen erkennbar. Zum anderen ist erkennbar, dass nach einem ausgeführten Kühlvorgang ein deutlicher "Überschwinger" im zweiten, d.h. unteren Bereich 34 resultiert. Letzteres ist darauf zurückzuführen, dass nach dem Ende des (temperaturgeregelten) Kühlvorgangs an der Wand 14 eine "Nachkühlung" erfolgt, wobei ohne den "homogenisierenden" Rührvorgang der zweiten Bereich 34, welcher näher an der kühlenden Wand 14 angeordnet ist, für ein bestimmtes Zeitintervall kälter bleibt als der erste Bereich 32, bis sich die Temperaturen in den beiden Bereich 32, 34 einander angleichen.

Demnach kann ab einer bestimmten (positiven bzw. negativen) Temperaturdifferenz mittels der Auswerteeinheit 20 ein entsprechendes Signal 40 ausgegeben werden, um einen Defekt der Mischvorrichtung 16 zu signalisieren, um eine entsprechende Person rechtzeitig zu informieren bzw. zu alarmieren, so dass ein mögliches Verderben der Flüssigkeit, insbesondere der Milch verhindert werden kann.

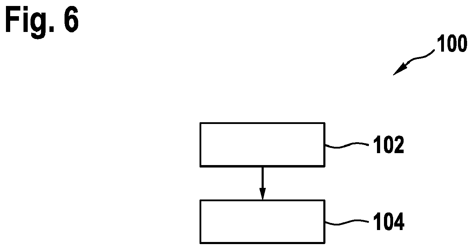

Fig. 6 zeigt ein Ablaufdiagramm eines erfindungsgemäßen Verfahrens 100 zur Überwachung einer Mischvorrichtung 16 eines Flüssigkeitsbehälters 10, insbesondere Milchtanks 10. Das Verfahren 100 umfasst einen Schritt des Erfassens 102 zumindest einer ersten Temperatur einer in dem Flüssigkeitsbehälter 10 befindlichen Flüssigkeit 12 in einem ersten Bereich 32 mittels eines ersten Temperatursensors 26 einer Temperaturerfassungseinheit 20, 20' und zumindest einer zweiten Temperatur der Flüssigkeit 12 in einem zweiten Bereich 34 mittels eines zweiten Temperatursensors 28 der Temperaturerfassungseinheit 20, 20'. Das Verfahren 100 umfasst schließlich einen Schritt des Ausgebens 104 eines Signals 40 in Abhängigkeit von einem Vergleich der zumindest einen erfassten ersten Temperatur und/oder eines Verlaufs der erfassten ersten Temperaturen mit der zumindest einen erfassten zweiten Temperatur und/oder einem Verlauf der erfassten zweiten Temperaturen mittels einer Auswerteeinheit 22, um die Mischvorrichtung 16 zu überwachen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Flüssigkeitsbehälter (10), insbesondere Milchtank (10), mit
- einer Mischvorrichtung (16) zum Rühren einer in dem Flüssigkeitsbehälter befindlichen Flüssigkeit (12);
- einer Temperaturerfassungseinheit (20; 20') mit einem ersten Temperatursensor (26) zum Erfassen zumindest einer ersten Temperatur der Flüssigkeit (12) in einem ersten Bereich (32) und einem zweiten Temperatursensor (28) zum Erfassen zumindest einer zweiten Temperatur der Flüssigkeit (12) in einem zweiten Bereich (34); und
- einer Auswerteeinheit (22), welche ausgebildet ist, in Abhängigkeit von einem Vergleich der zumindest einen erfassten ersten Temperatur und/oder eines Verlaufs der erfassten ersten Temperaturen mit der zumindest einen erfassten zweiten Temperatur und/oder einem Verlauf der erfassten zweiten Temperaturen ein Signal (40) auszugeben, um die Mischvorrichtung (16) zu überwachen.

2. Flüssigkeitsbehälter (10) nach Anspruch 1, **dadurch gekennzeichnet, dass** der erste Bereich (32) und der zweite Bereich (34) in verschiedenen Höhen (H1, H2) relativ zu einem Bodenbereich (24) des Flüssigkeitsbehälters (10) angeordnet sind.

3. Flüssigkeitsbehälter (10) nach Anspruch 2, **dadurch gekennzeichnet, dass** der erste Temperatursensor (26) in dem ersten Bereich (32) und der zweite Temperatursensor (28) in dem zweiten Bereich (34) angeordnet sind.

4. Flüssigkeitsbehälter (10) nach einem der vorhergehenden Ansprüche, **dadurch gekennzeichnet, dass** die Temperaturerfassungseinheit (20; 20') ein Gewichtelement (30) aufweist, um eine Position des ersten Temperatursensors (26) und/oder des zweiten Temperatursensors (28) in dem Flüssigkeitsbehälter (10) im Wesentlichen konstant zu halten.

5. Flüssigkeitsbehälter (10) nach Anspruch 4, **dadurch gekennzeichnet, dass** die Temperaturerfassungseinheit (20; 20') eine elektrische Leitung (36), insbesondere ein elektrisches Kabel (36) aufweist, welche/welches mit dem ersten Temperatursensor (26) und dem zweiten Temperatursensor (28) elektrisch verbunden ist, wobei das Gewichtelement (30) mit einem Leitungsendbereich (39) der elektrischen Leitung (36) mechanisch verbunden ist.

6. Flüssigkeitsbehälter (10) nach Anspruch 5, **dadurch gekennzeichnet, dass** der erste Temperatursensor (26) und/oder der zweite Temperatursensor (28) in und/oder an der elektrischen Leitung (36) angeordnet ist/sind.

7. Flüssigkeitsbehälter (10) nach Anspruch 5 oder 6, **dadurch gekennzeichnet, dass** die elektrische Leitung (36) durch einen Deckel (38) des Flüssigkeitsbehälters (10) geführt ist.

8. Flüssigkeitsbehälter (10) nach einem der Ansprüche 4 bis 7, **dadurch gekennzeichnet, dass** der erste Temperatursensor (26) und/oder der zweite Temperatursensor (28) an und/oder in dem Gewichtelement (30) angeordnet ist/sind.

9. Flüssigkeitsbehälter (10) nach einem der vorhergehenden Ansprüche, **dadurch gekennzeichnet, dass** die Auswerteeinheit (22) ausgebildet ist, das Signal (40) in Abhängigkeit von einer Temperaturdifferenz und/oder einem Temperaturdifferenzverlauf zwischen der erfassten ersten Temperatur und der erfassten zweiten Temperatur auszugeben.

10. Flüssigkeitsbehälter (10) nach Anspruch 9, **dadurch gekennzeichnet, dass** die Auswerteeinheit (22) ausgebildet ist, bei Erreichung, Unterschreitung oder Überschreitung eines definierten Temperaturdifferenzwertes und/oder definierten Temperaturdifferenzverlaufs ein Signal auszugeben.

11. Flüssigkeitsbehälter (10) nach einem der vorhergehenden Ansprüche, **dadurch gekennzeichnet, dass** die Auswerteeinheit (22) ausgebildet ist, das Signal (40) unter Berücksichtigung eines ausgeführten Kühlvorgangs, insbesondere eines Endes eines ausgeführten Kühlvorgangs auszugeben.

12. Flüssigkeitsbehälter (10) nach einem der vorhergehenden Ansprüche, **dadurch gekennzeichnet, dass** die Mischvorrichtung (16) an dem Flüssigkeitsbehälter (10), insbesondere an einer Wand (14) des Flüssigkeitsbehälters (10) angeordnet ist.

13. Flüssigkeitsbehälter (10) nach einem der vorhergehenden Ansprüche, **dadurch gekennzeichnet, dass** das Signal (40) an einer Anzeigeeinheit, insbesondere auf einem Display einer Anzeigeeinheit anzeigbar ist.

14. Mischvorrichtung (16) nach einem der vorhergehenden Ansprüche, **dadurch gekennzeichnet, dass** das Signal (40) einen Defekt und/oder einen Verschleiß und/oder eine Reparaturnotwendigkeit und/oder eine Wartungsnotwendigkeit der Mischvorrichtung (16) signalisiert.

15. Mischvorrichtung (16) nach einem der vorhergehenden Ansprüche, **gekennzeichnet durch** eine Kühleinrichtung zum Kühlen der Flüssigkeit (12).

16. Verfahren (100) zur Überwachung einer Mischvorrichtung (16) eines Flüssigkeitsbehälters (10), insbesondere Milchtanks (10), mit den Schritten:
- Erfassen (102) zumindest einer ersten Temperatur einer in dem Flüssigkeitsbehälter (10) befindlichen Flüssigkeit (12) in einem ersten Bereich (32) mittels eines ersten Temperatursensors (26) einer Temperaturerfassungseinheit (20; 20') und zumindest einer zweiten Temperatur der Flüssigkeit (12) in einem zweiten Bereich (34) mittels eines zweiten Temperatursensors (28) der Temperaturerfassungseinheit (20; 20'); und
- Ausgeben (104) eines Signals (40) in Abhängigkeit von einem Vergleich der zumindest einen erfassten ersten Temperatur und/oder eines Verlaufs der erfassten ersten Temperaturen mit der zumindest einen erfassten zweiten Temperatur und/oder einem Verlauf der erfassten zweiten Temperaturen mittels einer Auswerteeinheit (22), um die Mischvorrichtung (16) zu überwachen.

17. Auswerteeinheit (22), welche eingerichtet ist, die nachfolgenden Schritte auszuführen:
- Empfangen zumindest eines ersten Temperatursignals, welches eine mittels eines ersten Temperatursensors (26) einer Temperaturerfassungseinheit (20; 20') erfasste erste Temperatur einer in einem Flüssigkeitsbehälter (10), insbesondere einem Milchtank (10) befindlichen Flüssigkeit (12) in einem ersten Bereich (32) repräsentiert, und zumindest eines zweiten Temperatursignals, welches eine mittels eines zweiten Temperatursensors (28) der Temperaturerfassungseinheit (20; 20') erfasste zweite Temperatur der Flüssigkeit (12) in einem zweiten Bereich (34) repräsentiert; und
- Ausgeben eines Signals (40) in Abhängigkeit von einem Vergleich der zumindest einen erfassten ersten Temperatur und/oder eines Verlaufs der erfassten ersten Temperaturen mit der zumindest einen erfassten zweiten Temperatur und/oder einem Verlauf der erfassten zweiten Temperaturen mittels einer Auswerteeinheit (22), um die Mischvorrichtung (16) zu überwachen.

18. Computerprogramm, das dazu eingerichtet ist, alle Schritte der Auswerteeinheit nach Anspruch 16 durchzuführen.

19. Maschinenlesbares Speichermedium mit einem darauf gespeicherten Computerprogramm nach Anspruch 17.
